# FASCICULE DE BREVET EUROPEEN

(11) **EP 1 571 607 B1**
(45) Date de publication et mention de la délivrance du brevet: **27.07.2011**
(21) Numéro de dépôt: 05075498.5
(22) Date de dépôt: 09.01.1995
(51) Int. Cl.: G07F 7/10, G06F 13/38

(54) **Systeme pour transactions comprenant des terminaux et des cartes à mémoire et carte à mémoire correspondante**
Transaktionssystem mit Endgeräten und Speicherkarte und dazugehörige Speicherkarte
Transactions system comprising terminals and memory cards and corresponding memory cards

(30) Priorité: 10.01.1994 FR 9400164
(43) Date de publication de la demande: 07.09.2005
(62) Demande divisionnaire de: 95400037.8
(73) Titulaire: FRANCE TELECOM, 75015 Paris (FR); LA POSTE, 75015 Paris (FR)
(72) Inventeur: Remery, Patrick, 14000 Caen (FR); Darbour, Bernard, 14000 Caen (FR); Vallee, Françoise, 14480 Lantheuil (FR)
(74) Mandataire: Delumeau, François Guy

(56) Documents cités:
- WO-A-88/01818
- US-A- 4 709 136
- US-A- 5 036 461

## Description

### Domaine technique

La présente invention a pour objet un système pour transactions comprenant des terminaux et de cartes à mémoire. Elle trouve de multiples applications dans le contrôle d'accès, les transactions monétaires, le paiement par porte-monnaie électronique, etc.

### Etat de la technique antérieure

Les systèmes à terminaux et à cartes à mémoire sont aujourd'hui largement répandus. Dans de tels systèmes, c'est le terminal qui gère la transaction, la carte n'étant qu'un moyen sécurisé intervenant, à la demande du terminal, pour remplir certaines fonctions. Il peut s'agir de l'identification du porteur (contrôle d'un code confidentiel), du calcul de certificats permettant d'authentifier le compte du porteur et d'autoriser des échanges de données, etc... En d'autres termes, dans l'ensemble terminal-carte, c'est le terminal qui est le maître et c'est la carte qui est l'esclave.

Le programme applicatif, qui détermine la transaction à exécuter, est placé dans le terminal. Il est écrit en général dans une mémoire morte (ou "ROM" pour "Read-Only-Memory") et ne peut être modifié. Eventuellement, il pourrait être décrit dans une mémoire vive ou à accès direct ("RAM" pour "Random-Access-Memory"). Dans ce cas, il pourrait être modifié. Mais cela supposerait que le terminal soit relié à un réseau de télécommunications approprié apte à effectuer un téléchargement au moment de la nouvelle transaction à éxécuter.

Dans la plupart des systèmes actuels, les systèmes de transactions à terminaux et à cartes à mémoire sont dédiés à une application particulière, sans qu'il soit possible de modifier aisément cette application ou d'en ajouter d'autres. Par ailleurs, il est difficile et coûteux d'adapter les terminaux existants aux progrès permanents et rapides obtenus sur les cartes à mémoire.

La présente invention a justement pour but de remédier à ces inconvénients.

Le document WO-A-88 01818 décrit un système de transaction comprenant un terminal et la carte à microprocesseur d'un utilisateur. La carte comprend une mémoire EPROM, mémoire non volatile et non ré-inscriptible, dans laquelle une zone jeton est définie. Le document décrit les fonctions de chaque élément du système et leur interaction. En fait, il décrit un mode de paiement "off-line" basé sur l'écriture de jetons dans une carte à mémoire prépayée. L'échange de mots cryptés entre la carte de l'utilisateur et le module sécurisé à microprocesseur situé dans le terminal, autorise la délivrance d'une prestation comme l'impression d'un timbre postal.

Il est précisé que c'est le terminal qui contrôle l'interface avec la carte et les opérations des différentes parties du terminal incluant le clavier, l'afficheur, l'imprimante de la machine à affranchir

Le document US-A-5 036 461 décrit un terminal dans lequel le code du programme applicatif qui sera exécuté par le terminal est enregistré dans une carte à mémoire émise par une institution financière. Lorsque la carte est insérée dans le terminal, le programme de contrôle du terminal, à l'aide d'une procédure sécurisée, lit le code écrit dans la mémoire de la carte. Le code lu est ensuite exécuté par le terminal. Cependant, la lecture sécurisée peut être coûteuse en temps d'exécution, en particulier s'il s'agit d'une application de contrôle d'accès aux transports publics, autoroutes, etc...

### Exposé de l'invention

A cette fin, l'invention propose un système qui est toujours composé de transactions comprenant des terminaux et de cartes à mémoire, un ensemble terminal-carte contenant globalement des moyens dits "maîtres" aptes à commander une transaction particulière et des modules dits "esclaves" intervenant à la demande des moyens maîtres pour exécuter la transaction particulière, le système de l'invention étant caractérisé par le fait que les moyens maîtres sont disposés dans les cartes et les moyens esclaves dans les terminaux. On a donc renversé la hiérarchie des moyens. Il est alors beaucoup plus facile d'adapter, modifier ou d'ajouter des transactions en modifiant les cartes, les terminaux restant ce qu'ils sont.

L'invention objet de la présente demande élimine bien les inconvénients de l'art antérieur car le programme applicatif est exécuté par la carte à microprocesseur elle-même. Il n'est donc plus nécessaire de transférer vers le terminal le code applicatif. Dans la présente invention, le terminal met à disposition de la carte des fonctions élémentaires universelles (saisie clavier, affichage écran, transmission de données, etc...) qui sont appelées par la carte pendant l'exécution de son programme.

La présente invention a également pour objet une carte à mémoire destinée à un tel système. Cette carte se caractérise par le fait qu'elle comprend au moins une mémoire chargée par un logiciel propre à une transaction particulière et des moyens aptes à commander les moyens esclaves du terminal dans lequel la carte est introduite pour l'exécution de cette transaction.

### Brève description des figures

- les figures 1a, 1b, 1c, 1d illustrent un premier exemple de transaction, qui est un paiement par carte porte-monnaie électronique,
- la figure 2 illustre un second exemple de transaction, qui est la lecture du solde d'une carte porte-monnaie électronique.

### Description détaillée de modes de réalisation

Dans un mode de réalisation particulier, un terminal selon l'invention peut comprendre divers modules pris dans la liste suivante, qui n'est pas exhaustive :
- un module d'affichage, d'adresse TA ; plusieurs fonctions peuvent être remplies par un tel module, comme par exemple le format de caractère (gras, italique, souligné, etc...), le positionnement (à gauche, centré, à droite, à partir d'une adresse, sur la nième ligne, etc...) ; ce module pourra recevoir, par l'adresse correspondante, la commande "écriture" ;
- un module de saisie, qui peut être en particulier un clavier, d'adresse TC ; ce module pourra recevoir la commande "lecture" ; la saisie n'est pas nécessairement manuelle, mais peut être automatique dans une base de données ;
- un module de liaison vers l'extérieur, d'adresse TL ; il pourra recevoir la commande "lecture" (en réception) ou la commande "écriture" (en émission) ;
- un module mémoire, d'adresse TM ; ce module pourra recevoir la commande "lecture" ou "écriture" ; plusieurs sous-fonctions peuvent être définies (écriture à une adresse logique, effacement des zones mémoires, etc...) ;
- un module liaison vers une carte à mémoire dont l'adresse est notée TCAM ; ce module pourra recevoir toutes les commandes destinées à une carte à mémoire ou venant d'une autre carte à mémoire maître, et des acquittements venant d'autres modules.

Tous ces modules sont eslaves, c'est-à-dire qu'ils sont placés sous la commande de la carte ou d'une des cartes introduite(s) dans le terminal.

Les cartes possèdent, de leur côté, le logiciel applicatif et le protocole de communication leur permettant de communiquer avec n'importe quel terminal. Ce logiciel est écrit dans une mémoire à lecture seule (ROM) ou à lecture et écriture (EPROM, E²PROM).

La transaction est alors effectuée sous le contrôle de la carte et non sous celui du terminal. La carte transmet au terminal et à ses différents modules toutes les commandes nécessaires à l'exécution de la transaction. Un acquittement (c'est-à-dire une réponse) est retourné à la carte, laquelle l'analyse et décide de l'action suivante à entreprendre.

La carte à mémoire devient donc l'organe maître de la transaction. Le terminal et ses modules ne sont que des esclaves. S'il y a plusieurs cartes à mémoire introduites ou reliées à un même terminal, au début de la transaction, les cartes sont toutes provisoirement maîtres. Elles vont agir pour connaître leur mode de fonctionnement (maître ou esclave) par lecture du clavier du terminal. En fonction de la réponse donnée par le clavier, qui définit le type de transaction choisi, une seule de ces cartes restera maître, les autres devenant esclaves.

Par exemple, s'il s'agit d'une transaction du type paiement par porte-monnaie électronique (en abrégé PME), c'est une carte dite module de sécurité ou SAM ("Security Application Module"), qui va diriger la transaction. Les deux cartes PME et SAM, au début de la transaction, vont lire sur le clavier le type de transaction sélectionné par le commerçant disposant du terminal. La carte SAM va se placer en mode maître et la carte PME en mode esclave. La carte PME se mettra en position d'attente des ordres provenant de la carte SAM.

Au cours d'une transaction, une carte maître peut éventuellement passer en mode esclave et vice versa.

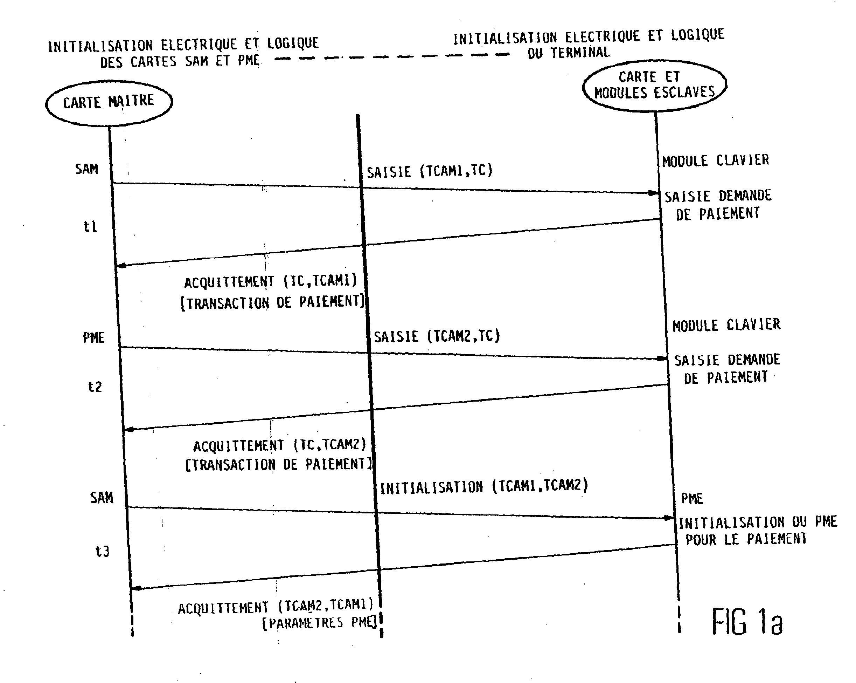

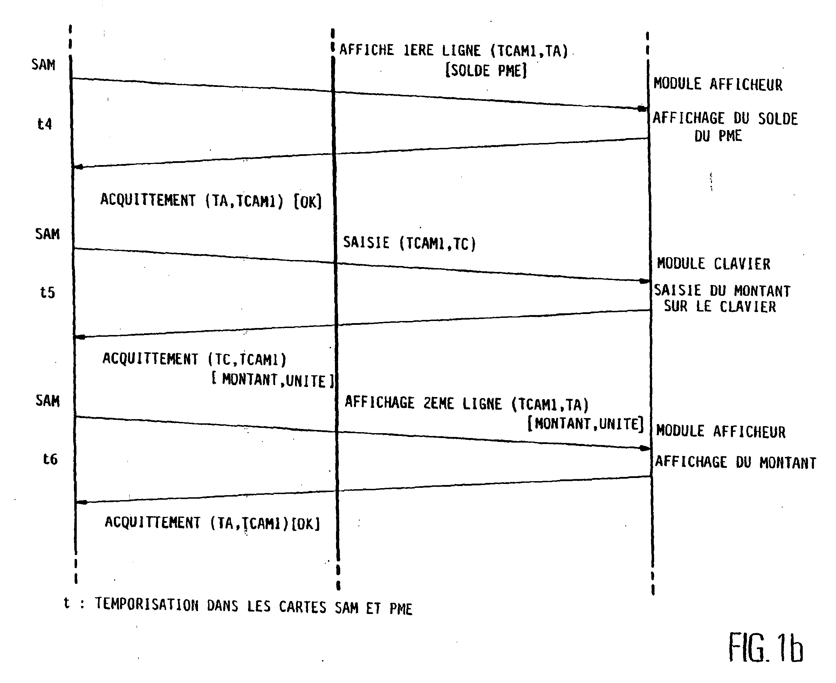

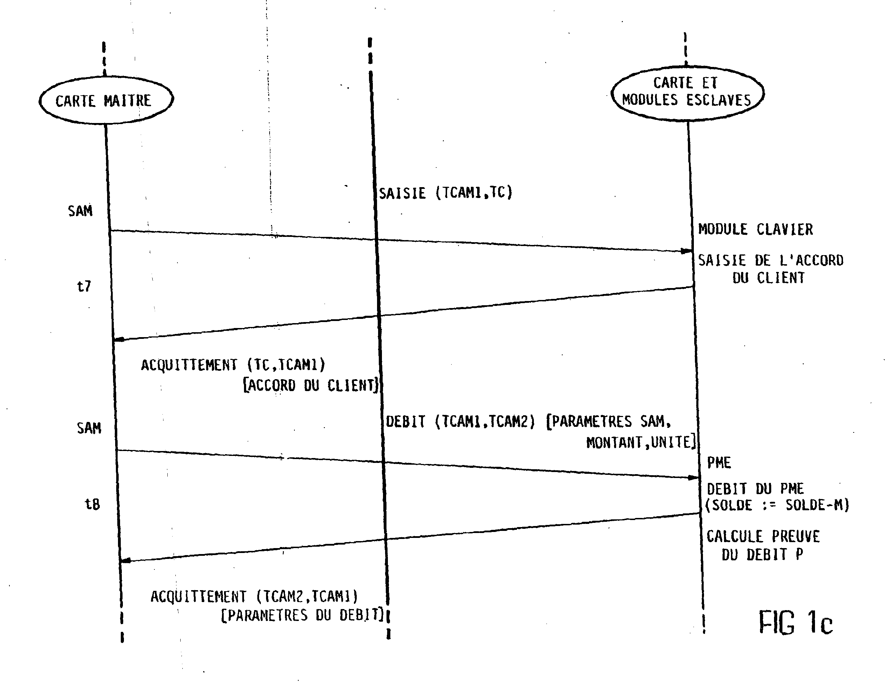

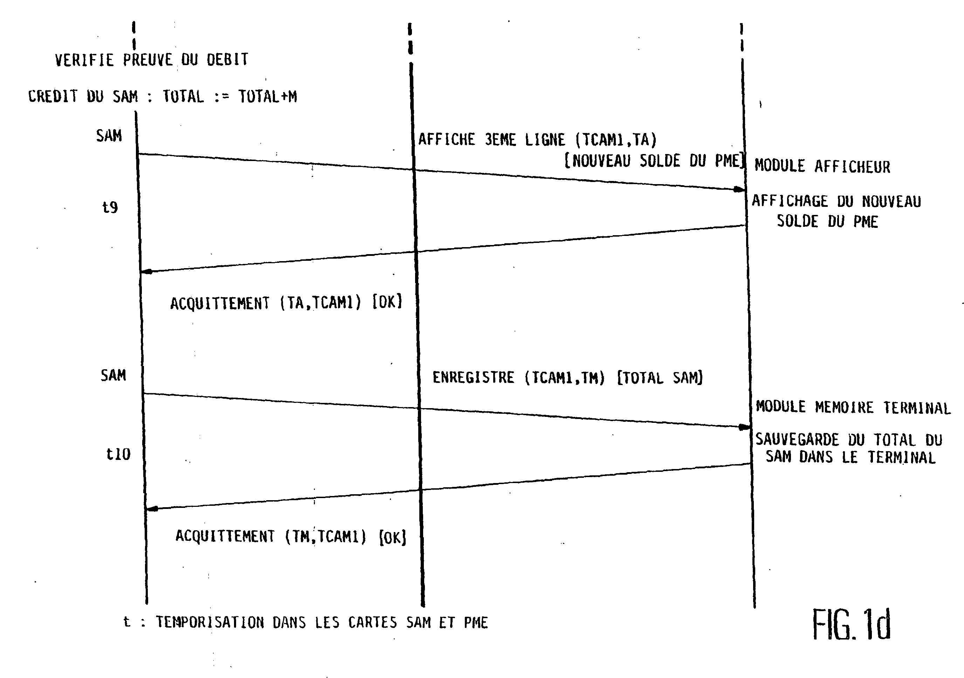

Les figures annexées illustrent deux modes de mise en oeuvre d'un système conforme à l'invention. Dans le cas des figures 1a, 1b, 1c, 1d, il s'agit d'une transaction de paiement par carte porte-monnaie électronique (PME) gérée par une carte SAM, qui est l'organe sécuritaire du commerçant. Celui-ci se crédite à chaque paiement du montant débité dans la carte PME.

La convention d'écriture pour les commandes et les acquittements mentionnés sur ces figures, est la suivante : la fonction remplie est d'abord indiquée (par exemple, "saisie", "initialisation", etc...) ; puis, entre parenthèses, on trouve l'adresse de la source puis celle du récepteur ; par exemple "(TCAM1, TC)" signifie que l'adresse de la source est "TCAM1", (c'est-à-dire que la source est une liaison vers une première carte à mémoire) et que l'adresse du récepteur est "TC", (le récepteur étant donc un clavier). Enfin, entre crochets et le cas échéant, on trouve les données liées à la commande ou à l'acquittement (par exemple "montant", "unité").

Dans le cas des figures 1a, 1b, 1c, 1d la transaction comprend les opérations suivantes :
- initialisation du terminal et des cartes "SAM" et "PME",
- saisie demande de transaction de paiement, pour la carte "SAM",
- saisie demande de transaction de paiement, pour la carte "PME",
- initialisation du "PME",
- affichage du solde du "PME",
- saisie du montant,
- affichage du montant,
- saisie de l'acceptation du client,
- débit du "PME",
- authentification du débit du PME et crédit du "SAM",
- affichage du nouveau solde du "PME",
- sauvegarde du total du "SAM" dans le terminal.

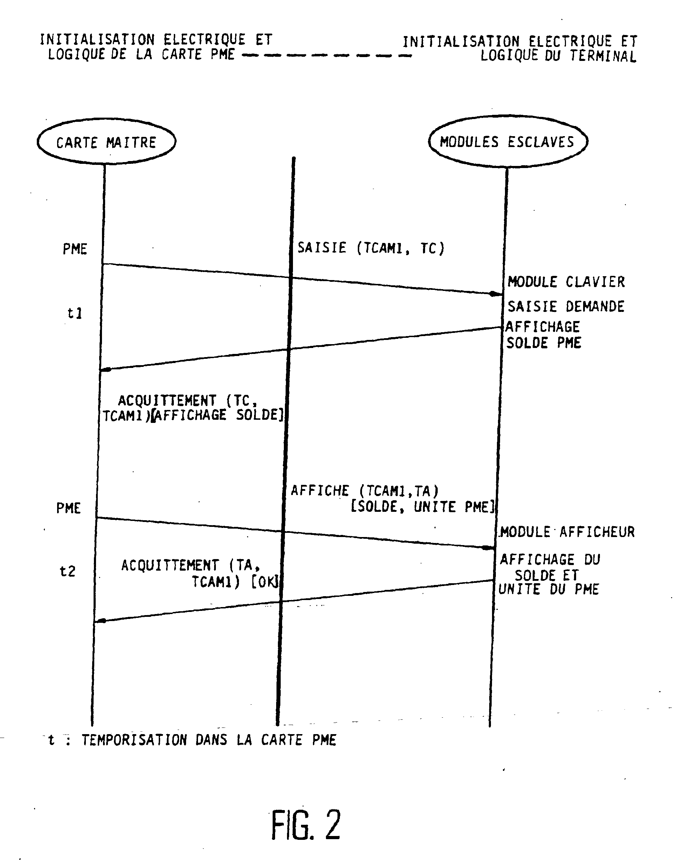

Dans le cas de la figure 2, la transaction dont il s'agit est la lecture du solde d'une carte PME.

La transaction comprend les étapes suivantes :
- initialisation du terminal et de la carte "PME",
- saisie de la demande de lecture du solde,
- commande affichage du solde.

On utilise donc les modules du terminal identifiés par les adresses "TA, TC, TCAM1" (la carte "PME").

## Revendications

1. Procédé de communication entre un terminal et plusieurs cartes à mémoire aptes à être couplées au terminal pour la réalisation d'une transaction, le terminal couplé aux cartes formant un ensemble terminal-cartes comprenant des moyens dits « maîtres » aptes à commander une transaction particulière et des moyens dits « esclaves » intervenant à la demande des moyens maîtres pour exécuter cette transaction, **caractérisé en ce qu'**il comprend les étapes suivantes :
- au début de la transaction, une étape dans laquelle les cartes sont toutes provisoirement maîtres ; et dans laquelle les cartes déterminent le type de transaction à réaliser ;
- une étape de détermination du mode de fonctionnement dans laquelle les cartes déterminent, en fonction du type de transaction, leur mode de fonctionnement maître ou esclave pour la réalisation de la transaction.

2. Procédé de communication selon la revendication 1, **caractérisé en qu'**au cours d'une transaction, une carte maître passe en mode esclave et vice-versa.

3. Procédé de communication selon la revendication 1 ou 2, **caractérisé en ce que** la détermination du mode de fonctionnement comprend une étape de lecture d'un module dudit terminal, la donnée recueillie définissant le type de transaction à réaliser.

4. Carte apte à être couplée avec un terminal pour la réalisation d'une transaction, **caractérisée en ce qu'**elle comprend des moyens maîtres de façon à ce qu'une transaction soit effectuée sous le contrôle de la carte par des moyens esclaves inclus dans le terminal, lesdits moyens maîtres étant aptes à transmettre au terminal des commandes nécessaires à l'exécution de la transaction, lesdits moyens maîtres incluant :
- des moyens aptes à déterminer le type de transaction à réaliser ;
- et des moyens de détermination du mode de fonctionnement maître ou esclave, en fonction du type de transaction, pour la réalisation de la transaction.

5. Carte selon la revendication 4, **caractérisée en ce que** les moyens maîtres incluent des moyens pour, au cours d'une transaction, passer du mode maître au mode esclave et vice-versa.

6. Carte selon la revendication 4, **caractérisée en ce que** les moyens maîtres incluent des moyens pour lire un module dudit terminal et recueillir des données définissant le type de transaction à réaliser.

7. Terminal destiné à effectuer une transaction particulière en coopération avec une carte, **caractérisé en ce que** le terminal comporte des moyens esclaves commandables par des moyens maîtres disposés dans la carte, les moyens esclaves incluant des moyens pour fournir aux cartes, au début de la transaction, des données définissant le type de transaction à réaliser, lesdites cartes étant aptes en fonction du type de transaction reçu à déterminer leur mode de fonctionnement maître ou esclave pour la réalisation de la transaction.

8. Terminal selon la revendication 7, **caractérisé en ce que** qu'il comprend un module apte à recevoir une commande de lecture issue des cartes et à transmettre en retour une donnée définissant le type de transaction.

9. Ensemble terminal-cartes comprenant un terminal selon la revendication 8 et au moins une carte selon la revendication 5.

10. Programme applicatif apte à être exécuté sur une carte apte à coopérer avec un terminal, le terminal couplé aux cartes formant un ensemble terminal-cartes comprenant des moyens dits « maîtres » aptes à commander une transaction particulière et des moyens dits « esclaves » intervenant à la demande des moyens maîtres pour exécuter cette transaction, ledit programme comprenant des instructions de code maîtres de façon à ce qu'une transaction soit effectuée sous le contrôle de la carte par des moyens esclaves inclus dans le terminal, l'exécution du programme comprenant les étapes suivantes :
- au début de la transaction, une étape de détermination dans laquelle la carte détermine le type de transaction à réaliser ;
- une étape de détermination du mode de fonctionnement dans laquelle la carte détermine, en fonction du type de transaction, son mode de fonctionnement maître ou esclave pour la réalisation de la transaction.

11. Programme selon la revendication 10, **caractérisé en ce qu'**il comprend des instructions de code aptes à faire passer, au cours d'une transaction, une carte d'un mode maître au mode esclave et vice-versa, lorsque lesdites instructions sont exécutées sur la carte.

12. Programme applicatif apte à être exécuté sur un terminal apte à coopérer avec plusieurs cartes, le terminal couplé aux cartes formant un ensemble terminal-cartes comprenant des moyens dits « maîtres » aptes à commander une transaction particulière et des moyens dits « esclaves » intervenant à la demande des moyens maîtres pour exécuter cette transaction, ledit programme comprenant des instructions de code esclaves de façon à ce qu'une transaction soit effectuée sous le contrôle de la carte par les moyens esclaves inclus dans le terminal, ledit programme applicatif étant exécuté sur ladite carte pour effectuer une transaction, l'exécution comprenant les étapes suivantes :
- au début de la transaction, les cartes étant toutes provisoirement maîtres, une étape de fourniture aux cartes de données définissant le type de transaction à réaliser, lesdites cartes étant aptes, en fonction du type de transaction reçu, à déterminer leur mode de fonctionnement maître ou esclave respectif pour la réalisation de la transaction.

13. Programme selon la revendication 12, **caractérisé en ce qu'**il comprend des instructions de code apte à recevoir une commande de lecture issue des cartes et à transmettre en retour une donnée définissant le type de transaction, lorsque lesdites instructions sont exécutées sur le terminal.

## Claims

1. Method for communication between a terminal and a number of memory cards suitable for being coupled to the terminal to carry out a transaction, the terminal coupled to the cards forming a terminal-cards assembly comprising so-called "master" means suitable for controlling a particular transaction and so-called "slave" means intervening at the request of the master means to execute this transaction, **characterized in that** it comprises the following steps:
- at the start of the transaction, a step in which the cards are all temporarily masters; and in which the cards determine the type of transaction to be carried out;
- a step for determining the operating mode in which the cards determine, according to the type of transaction, their operating mode, master or slave to carry out the transaction.

2. Communication method according to Claim 1, **characterized in that**, during a transaction, a master card switches to slave mode and vice versa.

3. Communication method according to Claim 1 or 2, **characterized in that** the determination of the operating mode comprises a step for reading a module of terminal, the collected datum defining the type of transaction to be carried out.

4. Card suitable for being coupled with a terminal to carry out a transaction, **characterized in that** it comprises master means so that a transaction is performed under the control of the card by slave means included in the terminal, said master means being suitable for transmitting to the terminal commands necessary to the execution of the transaction, said master means including:
- means suitable for determining the type of transaction to be carried out;
- and means for determining the operating mode, master or slave, according to the type of transaction, to carry out the transaction.

5. Card according to Claim 4, **characterized in that** the master means include means for, during a transaction, switching from the master mode to the slave mode and vice versa.

6. Card according to Claim 4, **characterized in that** the master means include means for reading a module of said terminal and collecting data defining the type of transaction to be carried out.

7. Terminal intended to perform a particular transaction in cooperation with a card, **characterized in that** the terminal includes slave means that can be controlled by master means arranged in the card, the slave means including means for supplying the cards, at the start of the transaction, with data defining the type of transaction to be carried out, said cards being suitable according to the type of transaction received, for determining their operating mode, master or slave, to carry out the transaction.

8. Terminal according to Claim 7, **characterized in that** it comprises a module suitable for receiving a read command from the cards and for transmitting in return a datum defining the type of transaction.

9. Terminal-cards assembly comprising a terminal according to Claim 8 and at least one card according to Claim 5.

10. Application program suitable for being executed on a card suitable for cooperating with a terminal, the terminal coupled to the cards forming a terminal-cards assembly comprising so-called "master" means suitable for controlling a particular transaction and so-called "slave" means intervening at the request of the master means to execute this transaction, said program comprising master code instructions so that a transaction is performed under the control of the card by slave means included in the terminal, the execution of the program comprising the following steps:
- at the start of the transaction, a determination step in which the card determines the type of transaction to be carried out;
- a step for determining the operating mode in which the card determines, according to the type of transaction, its operating mode, master or slave, to carry out the transaction.

11. Program according to Claim 10, **characterized in that** it comprises code instructions suitable for switching, during a transaction, a card from a master mode to the slave mode and vice versa, when said instructions are executed on the card.

12. Application program suitable for being executed on a terminal suitable for cooperating with a number of cards, the terminal coupled to the cards forming a terminal-cards assembly comprising so-called "master" means suitable for controlling a particular transaction and so-called "slave" means intervening at the request of the master means to execute this transaction, said program comprising slave code instructions so that a transaction is performed under the control of the card by the slave means included in the terminal, said application program being executed on said card to perform a transaction, the execution comprising the following steps:
- at the start of the transaction, the cards all being temporarily masters, a step for supplying the cards with data defining the type of transaction to be carried out, said cards being suitable, according to the type of transaction received, for determining their operating mode, respectively master or slave, to carry out the transaction.

13. Program according to Claim 12, **characterized in that** it comprises code instructions suitable for receiving a read command from the cards and for transmitting in return a datum defining the type of transaction, when said instructions are executed on the terminal.

## Patentansprüche

1. Verfahren für die Kommunikation zwischen einem Endgerät und mehreren Speicherkarten, die mit dem Endgerät gekoppelt werden können, um eine Transaktion auszuführen, wobei das Endgerät, das mit den Karten gekoppelt ist, eine Endgerät-Karten-Gesamtheit bildet, die so genannte "Master"-Mittel, die eine besondere Transaktion steuern können, und so genannte "Slave"-Mittel, die auf die Anforderung der Master-Mittel antworten können, um diese Transaktion auszuführen, umfasst, **dadurch gekennzeichnet, dass** es die folgenden Schritte umfasst.
- am Beginn der Transaktion einen Schritt, in dem die Karten vorläufig alle Master sind; und in dem die Karten den Typ der auszuführenden Transaktion bestimmen;
- einen Schritt des Bestimmens der Betriebsart, in der die Karten als Funktion des Transaktionstyps ihre Master- oder Slave-Betriebsart für die Ausführung der Transaktion bestimmen.

2. Kommunikationsverfahren nach Anspruch 1, **dadurch gekennzeichnet, dass** während einer Transaktion eine Master-Karte in die Slave-Betriebsart übergeht und umgekehrt.

3. Kommunikationsverfahren nach Anspruch 1 oder 2, **dadurch gekennzeichnet, dass** die Bestimmung der Betriebsart einen Schritt des Lesens eines Moduls des Endgeräts umfasst, wobei die gesammelten Daten den Typ der auszuführenden Transaktion definieren.

4. Karte, die mit einem Endgerät gekoppelt werden kann, um eine Transaktion auszuführen, **dadurch gekennzeichnet, dass** sie Master-Mittel umfasst, derart, dass eine Transaktion unter der Steuerung der Karte durch die in dem Endgerät enthaltenen Slave-Mittel ausgeführt wird, wobei die Master-Mittel an das Endgerät Befehle übertragen können, die für die Ausführung der Transaktion notwendig sind, wobei die Master-Mittel umfassen:
- Mittel, um den Typ der auszuführenden Transaktion zu bestimmen;
- und Mittel zum Bestimmen der Master- oder Slave-Betriebsart als Funktion des Transaktionstyps für die Ausführung der Transaktion.

5. Karte nach Anspruch 4, **dadurch gekennzeichnet, dass** die Master-Mittel Mittel umfassen, um im Verlauf einer Transaktion von der Master-Betriebsart in die Slave-Betriebsart überzugehen oder umgekehrt.

6. Karte nach Anspruch 4, **dadurch gekennzeichnet, dass** die Master-Mittel Mittel umfassen, um ein Modul des Endgeräts zu lesen und um Daten, die den Typ der auszuführenden Transaktion definieren, zu sammeln.

7. Endgerät, das dazu vorgesehen ist, eine besondere Transaktion in Kooperation mit einer Karte auszuführen, **dadurch gekennzeichnet, dass** das Endgerät Slave-Mittel umfasst, die durch Master-Mittel steuerbar sind, die in der Karte angeordnet sind, wobei die Slave-Mittel Mittel umfassen, um den Karten am Beginn der Transaktion Daten zuzuführen, die den Typ der auszuführenden Transaktion definierten, wobei die Karten als Funktion des empfangenen Transaktionstyps in der Lage sind, ihre Master- oder Slave-Betriebsart für die Ausführung der Transaktion zu bestimmen.

8. Endgerät nach Anspruch 7, **dadurch gekennzeichnet, dass** es ein Modul umfasst, das einen von den Karten stammenden Lesebefehl empfangen kann und als Antwort darauf Daten, die den Typ der Transaktion definieren, senden kann.

9. Endgerät-Karten-Gesamtheit, die ein Endgerät nach Anspruch 8 und mindestens eine Karte nach Anspruch 5 umfasst.

10. Anwendungsprogramm, das in einer Karte ausgeführt werden kann, die mit einem Endgerät kooperieren kann, wobei das Endgerät, das mit den Karten gekoppelt ist, eine Endgerät-Karten-Gesamtheit bildet, die so genannte "Master"-Mittel, die eine besondere Transaktion steuern können, und so genannte "Slave"-Mittel, die auf die Anforderung der Master-Mittel antworten können, um diese Transaktion auszuführen, umfasst, wobei das Programm Mastercode-Befehle enthält, derart, dass eine Transaktion unter der Steuerung der Karte durch die in dem Endgerät enthaltenen Slave-Mittel ausgeführt wird, wobei die Ausführung des Programms die folgenden schritte umfasst:
- am Beginn der Transaktion einen Bestimmungsschritt, in dem die Karte den Typ der auszuführenden Transaktion bestimmt;
- einen Schritt des Bestimmens der Betriebsart, in dem die Karte als Funktion des Transaktionstyps ihre Master- oder Slave-Betriebsart für die Ausführung der Transaktion bestimmt.

11. Programm nach Anspruch 10, **dadurch gekennzeichnet, dass** es Codebefehle umfasst, um im Verlauf einer Transaktion eine Karte von einer Master-Betriebsart in eine Slave-Betriebsart übergehen zu lassen und umgekehrt, wenn die Befehle in der Karte ausgeführt werden.

12. Anwendungsprogramm, das in einem Endgerät ausgeführt werden kann, das mit mehreren Karten kooperieren kann, wobei das Endgerät, das mit den Karten gekoppelt ist, eine Endgerät-Karten-Gesamtheit bildet, die so genannte "Master"-Mittel, die eine besondere Transaktion steuern können, und so genannte "Slave"-Mittel, die auf die Anforderung der Master-Mittel antworten können, um diese Transaktion auszuführen, umfasst, wobei das Programm Slavecode-Befehle enthält, derart, dass eine Transaktion unter der Steuerung der Karte durch die in dem Endgerät enthaltenen Slave-Mittel ausgeführt wird, wobei das Anwendungsprogramm in der Karte ausgeführt wird, um eine Transaktion auszuführen, wobei die Ausführung die folgenden Schritte umfasst:
- am Beginn der Transaktion, wenn die Karten alle vorläufig Master sind, einen Schritt des Zuführens von Daten, die den Typ der auszuführenden Transaktion definieren, zu den Karten, wobei die Karten als Funktion des empfangenen Transaktionstyps ihre Master- oder Slave-Betriebsart für die Ausführung der Transaktion bestimmen können.

13. Programm nach Anspruch 12, **dadurch gekennzeichnet, dass** es Codebefehle enthält, um einen Lesebefehl empfangen zu können, der von den Karten stammt, und um in Reaktion darauf Daten senden zu können, die den Transaktionstyp definieren, wenn die Befehle in dem Endgerät ausgeführt werden.
